# EUROPÄISCHE PATENTSCHRIFT

(11) **EP 0 961 084 B1**
(45) Veröffentlichungstag und Bekanntmachung des Hinweises auf die Patenterteilung: **16.10.2002**
(21) Anmeldenummer: 98109692.8
(22) Anmeldetag: 28.05.1998
(51) Int. Cl.: F24D 3/16, E04B 9/26

(54) **Deckenstrahlplatten-Heizung**
Radiant ceiling panel heating
Chauffage à plaques rayonnantes de plafond

(43) Veröffentlichungstag der Anmeldung: 01.12.1999
(73) Patentinhaber: Zehnder Verkaufs- und Verwaltungs AG, 5722 Gränichen (CH)
(72) Erfinder: Sexauer, Gerd, 79341 Kenzingen (DE)
(74) Vertreter: Stenger, Watzke & Ring Patentanwälte

(56) Entgegenhaltungen:
- DE-A- 1 946 011
- DE-A- 2 559 077
- DE-U- 9 102 266
- US-A- 4 766 951

## Beschreibung

Die Erfindung betrifft eine Heizung aus mindestens einer Deckenstrahlplatte, die aus einem Plattenelement bestimmter Baubreite mit einer vorgegebenen Anzahl von über die gesamte Baulänge verlaufenden Aufnahmenuten für jeweils ein Rohr und aus einer Mehrzahl von von einem wärmeabgebenden Medium durchströmten Rohren besteht und die mindestens im Bereich ihrer Enden mittels Aufhängevorrichtungen unter einer Gebäudedecke aufhängbar ist.

Derartige Deckenstrahlplatten-Heizungen sind bekannt. Sie werden zur Beheizung von Räumen mit einer Höhe von 3 bis 30 Meter eingesetzt und erfordern neben niedrigen Investitionskosten nur geringe Betriebs- und Folgekosten. Die Deckenstrahlplatten geben ihre Wärme zu 60 bis 70 % als Strahlung ab; der Rest wird durch Berührung an die umgebende Luft (Konvektion) übertragen.

Um die Leistung der bekannten Deckenstrahlplatten-Heizungen an den jeweiligen Einsatzzweck anzupassen, werden die Plattenelemente nicht nur mit unterschiedlichen Baulängen, sondern auch mit unterschiedlichen Baubreiten und mit einer unterschiedlichen Anzahl von jeweils in eine Aufnahmenut des Plattenelements eingelegten Rohren hergestellt. Die Baubreiten reichen beispielsweise von 300 mm mit zwei Rohren bis zu 1.310 mm mit acht Rohren.

Während die jeweils benötigten Baulängen problemlos dem jeweiligen Bedarf angepaßt werden können, erfordern die unterschiedlichen Baubreiten der bekannten Deckenstrahlplatten ein aufwendiges Herstellungsverfahren, da Blechstreifen unterschiedlicher Breite bevorratet und mit einer unterschiedlichen Zahl von Aufnahmenuten versehen werden müssen. Trotz der Einhaltung identischer Abstände zwischen den Aufnahmenuten bei Plattenelementen unterschiedlicher Baubreite ergibt sich somit ein erheblicher Herstellungsaufwand.

Die US-A-4,766,951 offenbart eine Paneeleinheit, welche zum Heizen sowie Kühlen verwendet werden kann. Diese Paneeleinheit ist zur Aufhängung an einer Decke bestimmt. Die Paneeleinheit setzt sich aus Einzelpaneelen zusammen, in denen eine einzige Rohrleitung schlangenlinienförmig geführt ist. Zwischen zwei "aktiven" Paneelen, in denen das ein wärmeabgebendes bzw. -aufnehmendes Medium führende Rohr entlang der Längsachse verläuft, ist jeweils ein "passives" Paneel angeordnet, welches von dem Rohr lediglich entlang seiner Schmalseite überquert wird. Eine aus den offenbarten Paneelen aufgebaute Deckenstrahlheizung besteht also aus gleichartig aufgebauten "aktiven" Paneelen, zwischen denen sich von den "aktiven" Paneelen unterscheidende "passive" Paneele angeordnet sind.

Der Erfindung liegt die **Aufgabe** zugrunde, die bekannte Deckenstrahlplatten-Heizung der eingangs beschriebenen Art dahingehend weiterzubilden, daß die Anpassung der Wärmeleistung an den jeweiligen Bedarfsfall auf einfache Weise bei gleichzeitig verringerten Fertigungskosten erfolgen kann.

Die **Lösung** dieser Aufgabenstellung durch die Erfindung ergibt sich aus den Merkmalen gemäß Anspruch 1. Weiterbildungen sind in den Unteransprüchen gekennzeichnet.

Durch die Herstellung des Plattenelements mit nur einer Baubreite und einer vorgegebenen Anzahl von Rohr-Aufnahmenuten wird die Herstellung der Deckenstrahlplatten erheblich vereinfacht und verbilligt, da nur Blechstreifen einer Breite bevorratet werden müssen und nur ein unveränderter Verformungsprozeß durchgeführt werden muß. Die Wärmeleistung der Deckenstrahlplatte läßt sich hierbei außer durch die Wahl der jeweils benötigten Baulänge durch die Gesamtzahl der in die Aufnahmenuten eingelegten Rohre bestimmen. Eine höhere Wärmeleistung wird dadurch erzielt, daß mehrere identische Plattenelemente nebeneinander angeordnet werden, wobei sich dadurch, daß die Plattenelemente mit ihren Längsrändern in einem vorgegebenen Abstand, beispielsweise von 50 mm, liegen, der weitere Vorteil ergibt, daß sich durch diese Vervielfachung identischer Deckenstrahlplatten auch eine entsprechende Vervielfachung der Wärmeleistung ergibt, weil jede Deckenstrahlplatte neben ihrer durch Wärmestrahlung abgegebenen Leistung wegen des zwischen den Deckenstrahlplatten vorgegebenen Abstandes auch ihre volle durch Konvektion erzeugte Wärmeübertragung an die Raumluft beibehält. Da dieser Konvektionsanteil an der gesamten Wärmeleistung zwischen 30 und 40 % der Gesamtleistung liegt, benötigt die erfindungsgemäße Deckenstrahlplatten-Heizung gegenüber den bekannten Ausführungen eine um bis zu 25 % geringere Installation von Heizfläche, um dieselbe Wärmeleistung zu erzielen. Die Erfindung ergibt somit nicht nur den Vorteil einer erheblich preiswerteren Herstellung, sondern auch einer Verringerung der zur Erzielung derselben Wärmeleistung benötigten Heizfläche und damit eine weitere Herabsetzung des benötigten Installationsaufwandes.

Gemäß einem weiteren Merkmal der Erfindung wird vorgeschlagen, im Abstand nebeneinander angeordnete Deckenstrahlplatten durch mindestens zwei gemeinsame Tragprofile miteinander zu verbinden, die vorzugsweise über lediglich zwei Aufhänger unter der Gebäudedecke aufhängbar sind.

Jedes Plattenelement ist gemäß einem weiteren Merkmal der Erfindung an seinen Längsrändern mit einer nach außen weisenden Abbiegung versehen, über die das Plattenelement mit entsprechenden Hakenelementen der Tragprofile verbindbar ist. Hierdurch ergibt sich eine besonders einfache Aufhängung der Plattenelemente an den Tragprofilen.

Schließlich wird mit der Erfindung vorgeschlagen, die Enden der Längsränder der Plattenelemente im Anschluß an die Abbiegung zur Bildung eines eine Isolierung haltenden Deckstreifens nach innen zurückzubiegen. Dieser etwa rechtwinklig von den senkrechten Längsrändern der Plattenelemente nach innen abstehende Deckstreifen schafft außer einer Stabilisierung der Isolierung im Randbereich der Plattenelemente eine zusätzliche Versteifung der Längsränder der Plattenelemente.

Auf der Zeichnung sind ein Ausführungsbeispiel einer Deckenstrahlplatte und drei unterschiedliche Deckenstrahlplatten-Heizungen unter Verwendung dieser Deckenstrahlplatte dargestellt, und zwar zeigen:
- Fig. 1: einen Querschnitt durch eine Deckenstrahlplatte, die zugleich ein erstes Ausführungsbeispiel für eine Deckenstrahlplatten-Heizung bildet,
- Fig. 2: eine der Fig. 1 entsprechende Darstellung eines zweiten Ausführungsbeispiels einer aus zwei Deckenstrahlplatten bestehenden Heizung,
- Fig. 3: eine den Fig. 1 und 2 entsprechende weitere Darstellung eines dritten Ausführungsbeispiels einer aus drei Deckenstrahlplatten bestehenden Heizung und
- Fig. 4: eine vergrößerte Darstellung einer Einzelheit der Aufhängung der Deckenstrahlplatten.

Bei dem in den Zeichnungen dargestellten Ausführungsbeispiel einer Deckenstrahlplatte besteht diese aus einem Plattenelement 1 bestimmter Baubreite, das mit einer vorgegebenen Anzahl von über die gesamte Baulänge des Plattenelements 1 verlaufenden Aufnahmenuten 1.1 für jeweils ein Rohr 2 sowie mit ebenfalls über die gesamte Länge durchlaufenden, beim Ausführungsbeispiel trapezförmigen Sicken 1.2 versehen ist. Wie die Zeichnungen erkennen lassen, müssen nicht alle Aufnahmenuten 1.1 jeweils mit einem Rohr 2 versehen sein.

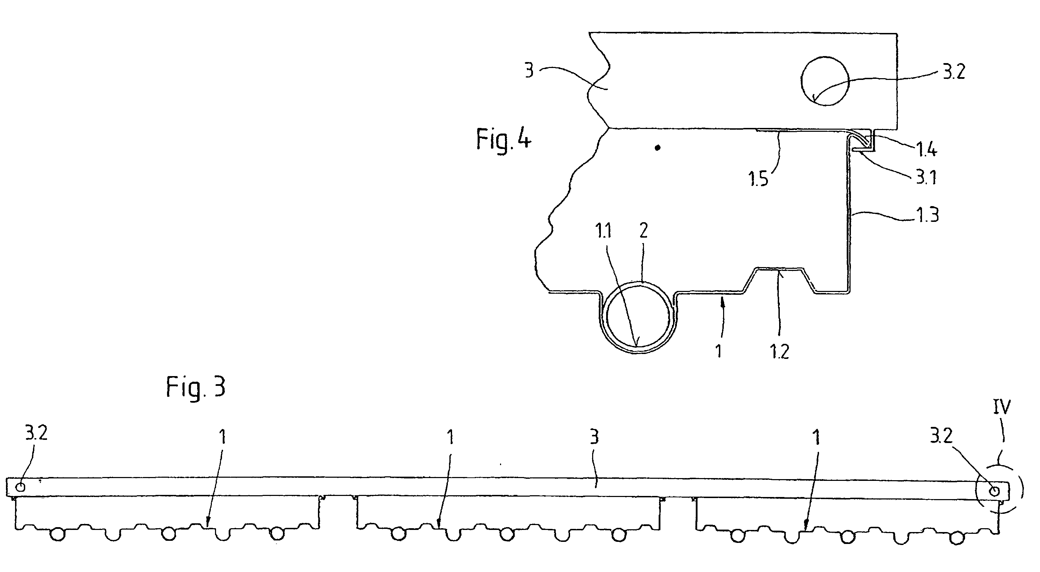

Die Längsränder 1.3 jedes Plattenelements 1 sind jeweils mit einer nach außen weisenden Abbiegung 1.4 versehen, wie dies insbesondere deutlich in Fig. 4 zu erkennen ist. Mit Hilfe dieser Abbiegungen 1.4 kann jedes Plattenelement 1 durch Tragprofile 3 unter einer nicht dargestellten Gebäudedecke aufgehängt werden, wobei die Abbiegungen 1.4 in Hakenelemente 3.1 des Tragprofils 3 eingreifen.

Bei den Ausführungsbeispielen schließen sich an die Abbiegungen 1.4 nach innen zurückgebogene Deckstreifen 1.5 an, die einerseits zur Stabilisierung der Randbereiche der Plattenelemente 1 und andererseits dazu dienen, ggf. in das Innere des Plattenelementes 1 eingelegte Isoliermatten in ihrer Lage zu sichern.

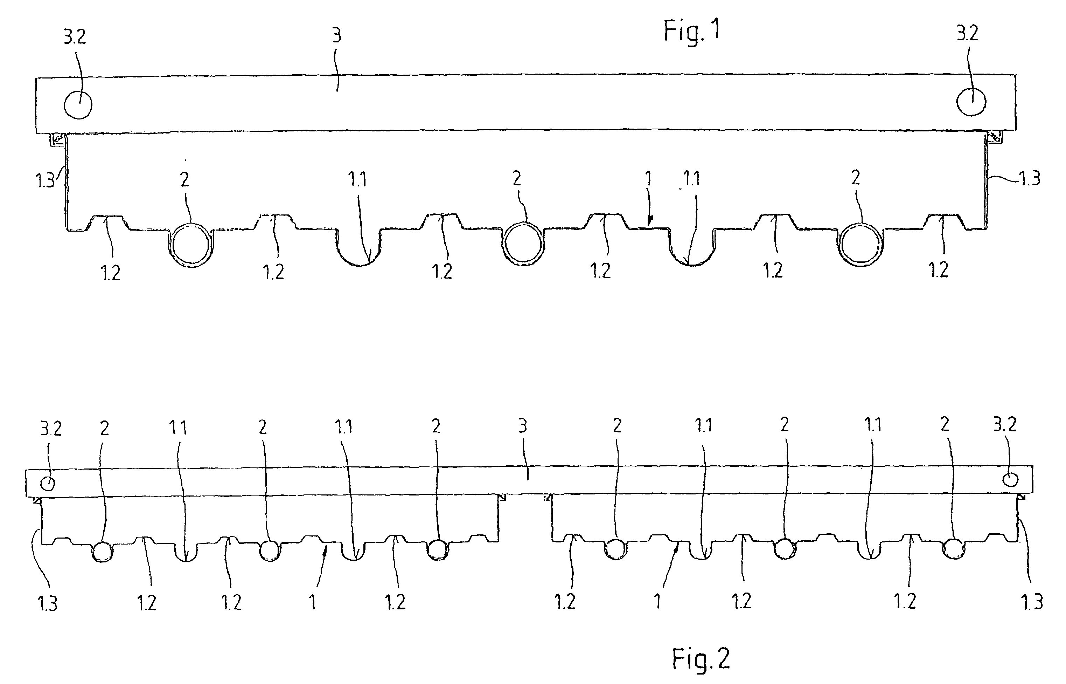

Wie die Fig. 1 bis 3 erkennen lassen, sind die Tragprofile 3 lediglich an ihren Enden mit Öffnungen 3.2 versehen, in die jeweils ein auf der Zeichnung nicht dargestellter Aufhänger eingreift, so daß auch mehrere Deckenstrahlplatten mittels nur zweier Aufhänger unter der Gebäudedecke aufgehängt werden können.

Um die Wärmeleistung der jeweiligen Deckenstrahlplatten-Heizung an den Bedarf anzupassen, werden Plattenelemente 1 mit der gewünschten Länge verwendet. Außerdem ist es möglich, die jeweils gewünschte Leistung durch die Anzahl der in die insgesamt vorhandenen Aufnahmenuten 1.1 eingelegten Rohre 2 zu verändern. Sofern diese Maßnahmen nicht ausreichen, werden mehrere Deckenstrahlplatten nebeneinander angeordnet, wobei jedes Plattenelement dieselbe Breite besitzt und die einzelnen Plattenelemente mit ihren Längsrändern 1.3 in einem vorgegebenen Abstand parallel zueinander angeordnet sind, wie dies die Fig. 2 und 3 zeigen.

Durch diese Vervielfachung identischer Deckenstrahlplatten für die jeweils benötigte Heizung wird nicht nur die Herstellung der Plattenelemente 1 erheblich vereinfacht, sondern auch die Wärmeleistung der Deckenstrahlplatten-Heizung vergrößert, weil jede Deckenstrahlplatte neben ihrer durch Wärmestrahlung abgegebenen Leistung wegen des zwischen den benachbarten Deckenstrahlplatten vorgegebenen Abstandes auch ihre volle durch Konvektion erzeugte Wärmeabgabe beibehält. Bei gleichzeitig erheblicher Vereinfachung der Herstellung und damit Verringerung der Herstellungskosten läßt sich auf diese Weise die für die jeweils gewünschte Leistung notwendige Installation von Heizfläche reduzieren.

### Bezugszeichenliste

- 1: Plattenelement
- 1.1: Aufnahmenut
- 1.2: Sicke
- 1.3: Längsrand
- 1.4: Abbiegung
- 1.5: Deckstreifen
- 2: Rohr
- 3: Tragprofil
- 3.1: Hakenelement
- 3.2: Öffnung

## Patentansprüche

1. Deckenstrahlplattenheizung aus mindestens einer Deckenstrahlplatte, die aus einem Plattenelement (1) und aus von einem Wärme abgebenden Medium durchströmten Rohren besteht und die mindestens im Bereich ihrer Enden mittels Aufhängevorrichtungen unter einer Gebäudedecke aufhängbar ist,
**dadurch gekennzeichnet,**
**daß** die Deckenstrahlplatte aus Plattenelementen (1) bestimmter Baubreite mit einer vorgegebenen Anzahl von über die gesamte Baulänge verlaufenden Aufnahmenuten (1.1) für jeweils ein Rohr (2) gebildet ist, wobei zur Anpassung an den Wärmeleistungsbedarf die Zahl der insgesamt in jedes Plattenelement (1) eingelegten Rohre (2) und die Zahl identischer Plattenelemente (1) bestimmbar sind, die mit ihren Längsrändern (1.3) in einem vorgegebenen Abstand parallel zueinander angeordnet sind.

2. Deckenstrahlplatten-Heizung nach Anspruch 1, **dadurch gekennzeichnet, daß** im Abstand nebeneinander angeordnete Deckenstrahlplatten durch mindestens zwei gemeinsame Tragprofile (3) miteinander verbunden sind.

3. Deckenstrahlplatten-Heizung nach Anspruch 2, **dadurch gekennzeichnet, daß** jedes Tragprofil (3) über lediglich zwei Aufhänger unter der Gebäudedecke aufhängbar ist.

4. Deckenstrahlplatten-Heizung nach einem der Ansprüche 1 bis 3, **dadurch gekennzeichnet, daß** jedes Plattenelement (1) an seinen Längsrändern (1.3) mit einer nach außen weisenden Abbiegung (1.4) versehen ist, über die das Plattenelement (1) mit entsprechenden Hakenelementen (3.1) der Tragprofile (3) verbindbar ist.

5. Deckenstrahlplatten-Heizung nach Anspruch 4, **dadurch gekennzeichnet, daß** die Enden der Längsränder (1.3) der Plattenelemente (1) im Anschluß an die Abbiegung (1.4) zur Bildung eines die Isolierung haltenden Deckstreifens (1.5) nach innen zurückgebogen sind.

## Claims

1. Radiant-ceiling-panel heater comprising at least one radiant ceiling panel which consists of a panel element (1) and tubes through which a heat-emitting medium flows and which can be hung at least in the region of its ends under a building ceiling by means of hanging devices, **characterized in that** the radiant ceiling panel is formed from panel elements (1) of a certain overall width and having a predetermined number of locating grooves (1.1), running over the entire overall length, for one tube (2) each, in which case, for adaptation to the demand for thermal output, the number of tubes (2) inserted overall into each panel element (1) and the number of identical panel elements (1) can be determined, the panel elements (1), with their longitudinal margins (1.3), being arranged parallel to one another at a predetermined distance apart.

2. Radiant-ceiling-panel heater according to Claim 1, **characterized in that** radiant ceiling panels arranged next to one another at a distance apart are connected to one another by at least two common supporting profiles (3).

3. Radiant-ceiling-panel heater according to Claim 2, **characterized in that** each supporting profile (3) can be hung under the building ceiling merely via two hangers.

4. Radiant-ceiling-panel heater according to one of Claims 1 to 3, **characterized in that** each panel element (1) is provided at its longitudinal margins (1.3) with a bend (1.4) which points outwards and via which the panel element (1) can be connected to corresponding hook elements (3.1) of the supporting profiles (3).

5. Radiant-ceiling-panel heater according to Claim 4, **characterized in that** the ends of the longitudinal margins (1.3) of the panel elements (1), following the bend (1.4), are bent back inwards for forming a cover strip (1.5) holding the insulation.

## Revendications

1. Chauffage au plafond par panneaux rayonnants constitué d'au moins un panneau rayonnant au plafond qui est constitué d'un élément à panneau (1) et de tubes dans lesquels circule un milieu dégageant la chaleur, panneau que l'on peut suspendre au plafond d'un bâtiment, au moins au niveau de ses extrémités, au moyen des dispositifs de suspension, **caractérisé en ce que**
le panneau rayonnant au plafond est constitué d'éléments à panneau (1) présentant une largeur totale définie et présentant un nombre prédéfini de rainures de logement (1.1) pour chacun des tubes (2), rainures qui sont présentes sur la totalité de la largeur totale, le nombre total de tubes (2) insérés dans chaque élément à panneau (1) ainsi que le nombre d'éléments à panneau (1) identiques pouvant être choisis en fonction du besoin en puissance calorifique, éléments qui sont disposés de manière telle que leurs bordures longitudinales (1.3), en respectant un espacement prédéfini, sont parallèles.

2. Chauffage au plafond par panneaux rayonnants selon la revendication 1, **caractérisé en ce que** les panneaux rayonnants au plafond qui sont disposés, en respectant un espacement, l'un à côté de l'autre, sont liés l'un à l'autre au moyen d'au moins deux profilés porteurs (3) communs.

3. Chauffage au plafond par panneaux rayonnants selon la revendication 2, **caractérisé** en ce l'on peut suspendre au plafond d'un bâtiment chaque profilé porteur (3) par seulement deux moyens de suspension.

4. Chauffage au plafond par panneaux rayonnants selon une quelconque des revendications 1 à 3, **caractérisé en ce que** chaque élément à panneau (1) présente à ses bordures longitudinales (1.3) un coude (1.4) vers l'extérieur par lequel l'on peut lier, au moyen des éléments à crochet (3.1) appropriés, l'élément à panneau (1) aux profilés porteurs (3).

5. Chauffage au plafond par panneaux rayonnants selon la revendication 4, **caractérisé en ce que** les extrémités des bordures longitudinales (1.3) des éléments à panneau (1) sont repliées vers l'intérieur, dans une zone adjacente au coude (1.4), afin de former une lame de couverture (1.5) destinée à maintenir l'isolant.
